# FASCICULE DE BREVET EUROPEEN

(11) **EP 0 694 259 B1**
(45) Date de publication et mention de la délivrance du brevet: **16.08.2001**
(21) Numéro de dépôt: 95401694.5
(22) Date de dépôt: 17.07.1995
(51) Int. Cl.: A01N 43/653

(54) **Composition herbicide granulaire à base au moins d'aminotriazole**
Granuläre herbizide Zusammensetzung die mindestens auf Aminotriazol basiert ist
Granular herbicidal composition based on at least aminotriazole

(30) Priorité: 19.07.1994 FR 9408911
(43) Date de publication de la demande: 31.01.1996
(73) Titulaire: CFPI NUFARM, 92233 Gennevilliers (FR)
(72) Inventeur: Schapira, Joseph, F-75015 Paris (FR); Guerin, Ange Claude, F-95130 le Plessis Bouchard (FR); Schild, Jacques, F-92230 Gennevilliers (FR); Fuchs, Jean-Jacques, F-95170 Deuil la Barre (FR); Fournials, Jean-Paul, F-95000 Cergy Pontoise (FR)
(74) Mandataire: Koch, Gustave

(56) Documents cités:
- WO-A-89/00079
- FR-A- 2 589 325
- W.VAN VALKENBURG 'PESTICIDE FORMULATIONS' , M.DEKKER , NEW YORK, US Chapter 5, J.A.POLON 'FORMULATIONS OF OESTICIDAL DUSTS, WETTABLE POWDERS AND GRANULES', pages 143-212 * page 199 - page 205 *
- C.R.WORTHING ET AL. 'The Pesticide Manual' , BRITISH CROP PROTECTION COUNCIL , FARNHAM, GB * page 30, 'Formulations' *
- CHEMICAL ABSTRACTS, vol. 115, no. 13, 30 Septembre 1991 Columbus, Ohio, US; abstract no. 130058, & HU-A-54 024 (NEHEZVEGYIPARI KUTATI INTEZET) 28 Janvier 1991
- CHEMICAL ABSTRACTS, vol. 97, no. 13, 27 Septembre 1982 Columbus, Ohio, US; abstract no. 105521, G.BUDOI ET AL. 'Studies on the efficiency of some herbicides applied to a vineyard' & LUCR.STIINT.-INST.AGRON. "NICOLAE BALCESCU", vol. 24, Ser., BUCURESTI, RO, pages 75-77,

## Description

L'invention a pour objet une composition herbicide granulaire, soluble dans l'eau, à base d'aminotriazole seul ou d'aminotriazole en combinaison avec au moins un autre herbicide choisi dans le groupe comprenant les thiocyanates alcalins, alcalino-terreux et d'ammonium, le glyphosate, le sel de sodium du MCPA, le sulfosate, le glufosinate, le paraquat et la métribuzine.

Elle vise également, à titre de produit industriel nouveau, une forme de présentation particulière de la susdite composition herbicide dans laquelle les granulés constitutifs sont compactés en blocs.

L'expression "composition granulaire" désigne une forme de présentation solide suffisamment dure pour éviter l'abrasion ou l'écrasement dans des conditions normales de stockage, de transport et de manipulation.

L'aminotriazole, c'est-à-dire la 1,2,4-triazolylamine, également appelée 3-amino-1,2,4-triazole ou encore 1H-1,2,4-triazol-3-amine, est un herbicide à action racinaire et foliaire capable d'inhiber la synthèse de la chlorophylle et la repousse des bourgeons; il est largement utilisé avec succès comme herbicide sélectif sur la vigne et comme herbicide total sur zones non agricoles; il possède également une action anti-germinatrice; l'aminotriazole technique se présente généralement sous forme d'écailles ou de poudre blanche ou verdâtre ou jaunâtre, avec un point de fusion de 149 à 159°C, et une pureté minimale de 95% établie par argentimétrie; il peut être identifié selon la méthode CIPAC n°90.

Le thiocyanate d'ammonium, pris à titre d'exemple de thiocyanate alcalin, se présente généralement sous forme d'une poudre blanche cristalline, avec un point de fusion de 140 à 148°C et une pureté minimale de 98 à 99% établie par argentimétrie; le thiocyanate de sodium, à titre d'autre exemple de thiocyanate alcalin, se présente également sous forme d'une poudre blanche cristalline, avec une pureté de 92 à 96%, mais ces teneurs peuvent être légèrement diminuées par le fait que, pour faciliter leur manipulation et éviter la prise en masse sous l'effet de l'humidité ou de la pression, ces produits reçoivent un enrobage par quelques pourcents de charge, par exemple de silice; les thiocyanates sont des herbicides de contact non sélectifs.

Il est connu, notamment par le brevet FR-A-1 248 296, que, lors de l'utilisation simultanée d'aminotriazole et d'un thiocyanate alcalin, il se produit une potentialisation des effets désherbants de chacun des deux constituants de la combinaison.

En d'autres termes, lorsque l'on combine l'aminotriazole avec l'ion thiocyanate, des doses plus faibles d'aminotriazole et des doses nettement plus faibles de thiocyanate que celles habituellement nécessaires pour obtenir un effet désherbant acceptable pour chacun des produits pris séparément, conduisent à d'excellents résultats; en d'autres termes, la combinaison d'aminotriazole et du thiocyanate conduit à de meilleurs résultats avec des doses moindres, et à un effet prolongé dans le temps.

Les compositions herbicides à base au moins d'aminotriazole, c'est-à-dire pouvant comprendre un autre herbicide et notamment un thiocyanate alcalin, sont traditionnellement présentées sous forme de solutions aqueuses concentrées ou sous forme de poudres solubles.

Aucune de ces deux présentations, notamment lorsqu'il s'agit des combinaisons d'aminotriazole et d'un thiocyanate alcalin, n'est exempte d'inconvénients.

Dans le cas des présentations sous forme de solutions aqueuses, la solubilité dans l'eau des matières actives est limitée à environ 240 g/l pour l'aminotriazole et à 215 g/l pour le thiocyanate d'ammonium, dans le cas d'une association des deux produits, la tenue au froid étant de 0°C environ; on peut améliorer la tenue au froid pour les pays ayant un climat rigoureux en diluant davantage, par exemple à 200 g/l d'aminotriazole et à 187 g/l de thiocyanate d'ammonium ou encore à 240 g/l d'aminotriazole et à 55 g/l de thiocyanate d'ammonium en acidifiant la solution avec un acide minéral; de plus, les présentations liquides, pour former une solution homogène, ne peuvent accepter que des adjuvants solubles dans le milieu; du fait de leur dilution, les solutions aqueuses nécessitent des emballages en matière plastique volumineux, donc coûteux, entraînant des frais de transport et de stockage, ainsi que des frais de nettoyage ou de destruction après usage; par ailleurs, les manipulateurs doivent prendre garde d'éviter toutes projections sur la peau et dans les yeux, et doivent pouvoir se rincer à l'eau dès que possible; enfin, dans le cas de l'acidification de ces solutions aqueuses d'aminotriazole et de thiocyanate, on peut craindre une corrosion du matériel d'application ou des barrières métalliques qui entourent quelquefois les champs.

Les présentations sous forme de poudres solubles remédient à certains des inconvénients inhérents aux solutions aqueuses, mais elles restent perfectibles car elles sont poussiéreuses et les fines particules de poudre peuvent s'envoler et se coller à la peau du manipulateur à cause de la très forte hygroscopicité du thiocyanate d'ammonium ou de sodium qui devient rapidement déliquescent au contact de la peau; en outre, les présentations sous forme de poudres présentent l'inconvénient de générer des mottes dures et compactes en dépit de la présence des agents antimottants usuels pour peu que des traces d'humidité subsistent dans la poudre lors de la fabrication ou s'introduisent accidentellement dans l'emballage; enfin, elles présentent l'inconvénient résidant dans le fait que les matières actives peuvent subir une ségrégation en raison de leurs granulométries, ou de leurs densités différentes, notamment sous l'effet des vibrations subies pendant le transport.

La Société Demanderesse, consciente de ces problèmes, a déjà proposé de présenter, sous forme granulaire, des compositions herbicides contenant une substance phytopharmaceutique constituée notamment par de l'aminotriazole, éventuellement combinée à d'autres substances actives.

Et on connaît par ailleurs des compositions herbicides granulaires à base d'autres herbicides.

Ainsi, on connaît déjà, par le EP-A-0 378 985, des compositions herbicides granulaires solubles dans l'eau; la matière active dans ces compositions est le glyphosate éventuellement associé à un autre herbicide, soluble dans l'eau, choisi parmi l'acifluorfen, le chloramben, le 2,4-D, l'endothal, le mecoprop, le picloram, le MCPA, le benzac, le dicamba, le dalapon, le MCPB, le Pursuit et le Scepter.

On connaît également, par le brevet WO 89/00079, des compositions herbicides granulaires dispersibles dans l'eau; la matière active dans ces compositions dispersibles dans l'eau est choisie dans le groupe comprenant la cyperméthrine, le diuron, la simazine, l'atrazine, la cyanazine, le dalapon-Na, le mélange de la simazine avec l'amitrole et le dalapon-Na, le fluométuron, le méthazole, le métoxuron, le norflurazon, l'oryzaline, l'hexazinone, le mélange de l'hexazinone avec le diuron, le métribuzen, le thiram, l'azinphos-méthyle, le mélange du métiram avec le nitrothal-isopropyle, et le propargite.

Les compositions granulaires à base d'aminotriazole déjà proposées par la Société Demanderesse sont, quant à elles, décrites dans le brevet FR-A-85 16297; il s'agit de granulés délitables à base d'aminotriazole seul ou combiné à d'autres substances actives, notamment les thiocyanates alcalin, ces granulés délitables étant obtenus en procédant successivement:
- à la réalisation d'un mélange intime des substances actives, d'un liant dispersant constitué par un sel alcalin ou d'ammonium d'un condensat de naphtolsulfonate et de résol, d'un hydrotrope délitant constitué par un sel alcalin, ou d'ammonium d'un acide alkylbenzène sulfonique et éventuellement d'autres adjuvants, sous forme d'une poudre fine homogène éventuellement broyée sur un broyeur à poudre avant réhomogénéisation,
- à la granulation dans un granulateur à plateau tournant ou une cuve munie d'agitateurs et de systèmes de cassage de mottes et
- au séchage des granulés.

Or, ces granulés n'ont pas donné entièrement satisfaction.

L'invention a donc pour but, surtout, de remédier aux inconvénients de l'art antérieur.

Et la Société Demanderesse a le mérite d'avoir trouvé que ce but est atteint dès lors que la composition herbicide granulaire, soluble dans l'eau, selon l'invention est préparée en faisant passer par les orifices de la grille d'un appareil d'extrusion de l'aminotriazole seul ou en mélange intime homogène avec au moins un autre herbicide choisi dans le groupe comprenant les thiocyanates alcalins, alcalino-terreux et d'ammonium, le glyphosate, le sel de sodium du MCPA, le sulfosate, le glufosinate, le paraquat et la métribuzine, après l'avoir, si nécessaire, amené par broyage à une granulométrie convenable, mélangé à une quantité d'eau suffisante pour assurer sa cohésion sous une pression modérée et mis éventuellement en présence d'un agent tensio-actif, l'opération d'extrusion ainsi réalisée fournissant des granulés de forme cylindrique qui sont séchés.

Le résultat est d'autant plus inattendu et surprenant que le caractère fortement hygroscopique d'au moins certains des herbicides associés à l'aminotriazole, en particulier les thiocyanates, pouvait faire craindre un manque d'homogénéité dû à l'absorption d'eau nécessaire à la granulation.

Il s'ensuit que la composition herbicide granulaire soluble dans l'eau, conforme à l'invention, à base d'aminotriazole seul ou à base d'aminotriazole en combinaison avec au moins un autre herbicide choisi dans le groupe comprenant les thiocyanates alcalins, alcalino-terreux et d'ammonium, le glyphosate, le sel de sodium du MCPA, le sulfosate, le glufosinate, le paraquat et la métribuzine, est caractérisée par le fait qu'elle se présente sous la forme de granulés de forme cylindrique, de composition et de diamètre substantiellement identiques d'un granulé de forme cylindrique à l'autre pour une composition herbicide granulaire donnée, le diamètre et la longueur desdits granulés de forme cylindrique étant respectivement de l'ordre de 0,4 à 2 mm, de préférence de 0,8 à 1,4 mm, et de l'ordre de 5 à 10 millimètres, ladite composition herbicide granulaire étant susceptible d'être obtenue par mise en oeuvre d'un procédé suivant lequel de l'aminotriazole seul ou en mélange intime homogène avec au moins un autre herbicide du susdit groupe, est, si nécessaire, amené par broyage à une granulométrie convenable, mélangé à une quantité d'eau suffisante pour assurer sa cohésion sous une pression modérée, mis éventuellement en présence d'un agent tensio-actif et amené à traverser les orifices de la grille d'un appareil d'extrusion, les granulés de forme cylindrique ainsi obtenus étant séchés.

Les granulés constitutifs de la susdite composition herbicide granulaire répondent aux conditions de dureté, ont une composition très voisine de la composition globale du produit, ne sont pas sujets à des phénomènes de ségrégation et se dissolvent tous substantiellement dans le même temps.

Selon un mode de réalisation avantageux, la composition herbicide granulaire conforme à l'invention se présente sous la forme de blocs, avantageusement parallélépipédiques obtenus par compactage avant séchage, sous une pression suffisante, notamment de O,1 à 10 kPa d'une quantité suffisante de ses granulés constitutifs.

Dans cette présentation particulière dans laquelle les granulés sont compactés en blocs, l'ensemble est également suffisamment dur pour éviter l'abrasion ou l'écrasement dans des conditions normales de stockage, de transport et de manipulation; les blocs ont la forme notamment de parallélépipèdes rectangles mais peuvent également avoir la forme de cubes, cylindres, sphères, pyramides, troncs de cône, prismes et autres selon le matériel de compression ou le moule utilisé pour les obtenir; leurs dimensions peuvent aller de quelques centimètres à quelques dizaines de centimètres dans leur plus grande dimension.

La nouvelle composition herbicide granulaire conforme à l'invention réunit les avantages des présentations sous forme de poudre et sous forme de solution sans en avoir les inconvénients; elle peut être très concentrée en matière active, la seule limitation étant la richesse en matière active du produit technique utilisé.

Elle permet également, lorsque l'aminotriazole est associé à un autre herbicide du groupe défini plus haut, de faire varier les proportions des matières actives à volonté; on peut par exemple prévoir des proportions aminotriazole/thiocyanate d'ammonium allant de 95/5 à 40/60, de préférence de 54/46 à 70/30 en poids, le problème de tenue au froid des solutions aqueuses ne se posant pas.

Il est possible de faire comporter à la composition herbicide granulaire conforme à l'invention, des adjuvants de formulation capables d'améliorer l'efficacité herbicide par leur pouvoir mouillant ou pénétrant, ou par leur pouvoir rétenteur d'humidité ou leur capacité à résister au lessivage dû à la pluie ou à la rosée.

Par ailleurs, la composition herbicide granulaire conforme à l'invention n'est pas poussiéreuse et, par conséquent, le risque de contamination par la peau est très réduit; l'emballage qui peut être un sac papier étanche à l'humidité, se vide parfaitement et peut être détruit après usage sans risque de contenir encore de la matière active collée sur ses parois.

Il est possible d'ajouter les autres herbicides du groupe susmentionné à la composition selon l'invention au moment de la préparation extemporanée dans la citerne de préparation de la bouillie destinée au traitement herbicide; cependant, pour des commodités de mise en oeuvre ou pour éviter des erreurs de proportions, on peut aussi faire comporter ces autres herbicides à la composition proprement dite dans les proportions souhaitées.

Se proposant, par conséquent, de constituer les compositions herbicides granulaires conformes à l'invention, on s'y prend comme suit ou de façon équivalente.

On sélectionne d'abord la matière active qui comprend au moins de l'aminotriazole et éventuellement au moins l'un des herbicides du groupe comprenant les thiocyanates alcalins, alcalino-terreux et d'ammonium, le glyphosate, le sel de sodium du MCPA, le sulfosate, le glufosinate, le paraquat et la métribuzine.

On prépare un mélange intime et homogène des constituants de la composition existant à l'état de poudre et on procède, si nécessaire, à un broyage afin d'arriver à une granulométrie convenable pour que les particules élémentaires, tout en ayant une dimension leur assurant un temps de dissolution assez court, ne puissent pas provoquer de colmatage au niveau des orifices de la grille de l'appareil d'extrusion. On ajoute alors éventuellement les produits liquides, notamment l'agent tensio-actif, que l'on souhaite introduire dans la formule et on procède à une homogénéisation.

La poudre ainsi obtenue est mélangée avec une quantité d'eau suffisante pour assurer sa cohésion lorsqu'elle est soumise à une compression modérée; dans la pratique, la valeur de la pression appliquée peut être de 50 g/cm²; dans une variante, cette quantité d'eau amenée par pulvérisation permet d'introduire une quantité supplémentaire de tensio-actif que l'on dissout préalablement dans celle-ci.

La poudre ainsi obtenue est extrudée au travers d'une grille percée de trous en utilisant un appareil d'extrusion; les orifices de la grille ont un diamètre choisi en fonction du diamètre souhaité pour vermicelles cylindriques devant être obtenus; ce diamètre est généralement d'environ 1 millimètre. Les granulés de forme cylindrique obtenus ont un diamètre de l'ordre de 0,6 à 2 mm, de préférence de 0,8 à 1,4 mm et une longueur pouvant atteindre plusieurs centimètres, notamment de 5 à 10 cm; ils sont séchés soit en étuve, en couche mince à une température supérieure à 60°C, soit en enceinte hermétique dans laquelle est introduit un agent desséchant du type chlorure de calcium anhydre ou silicagel, soit encore dans une enceinte du même type placée sous vide partiel pour accélérer le séchage. Il est également possible d'utiliser un procédé en lit fluidisé à flux d'air d'une température supérieure à 60°C, ce qui présente l'avantage de réduire, sans étape de traitement supplémentaire, comme recherché, les vermicelles extrudés à des tronçons de quelques millimètres de longueur. On obtient ainsi un matériau de structure régulière dont le rapport diamètre/longueur peut être réglé entre 1/1 et 1/5.

Après le séchage, un calibrage final permet d'éliminer d'éventuels agglomérats et les particules fines qui donneraient un caractère poussiéreux au produit obtenu.

L'agent tensio-actif éventuellement présent a pour but d'améliorer le pouvoir mouillant ou peu moussant de la bouillie de traitement préparée au moment de l'emploi ou de produire un effet biologique au niveau des plantes traitées.

Le tensio-actif est de préférence de type non ionique ou anionique et sa proportion par rapport à la composition finale est de 0 à 11%, de préférence de 0 à 3% en poids.

Il est avantageusement choisi parmi les alcools gras polyoxyalkylénés, les alkylphénols polyalkylénés, de préférence les nonylphénols polyoxyéthylénés, pour ce qui est des tensio-actifs non ioniques et parmi les sels de sodium des dérivés sulfatés d'alcools gras polyalkylénés ou non, d'alkylphénols polyalkylénés ou non, ainsi que parmi les alkylsulfosuccinates de sodium, de préférence le dioctylsulfosuccinate de sodium, pour ce qui est des tensio-actifs anioniques.

Les compositions herbicides granulaires conformes à l'invention présentent, au niveau de chaque granulé constitutif, une composition individuelle très voisine de la composition globale du produit dans son ensemble; de plus, pour une composition herbicide granulaire donnée conforme à l'invention, la composition et le diamètre des granulés cylindriques constitutifs sont substantiellement identiques d'un granulé à l'autre; de ce fait, le temps de dissolution de la composition est constant; autrement dit, le temps de dissolution d'un granulé est indépendant de sa longueur et seulement fonction du diamètre; on s'affranchit donc de la notion classique de granulométrie puisque le temps de dissolution ne dépend plus de la masse du granulé.

Ce temps de dissolution peut être apprécié en versant une masse de 10 grammes de la composition herbicide granulaire selon l'invention dans une éprouvette cylindrique en verre d'une contenance de 1 litre remplie d'eau de ville et en la retournant de 180° lentement, permettant ainsi aux granulés de passer alternativement d'une extrémité à l'autre de l'éprouvette. On note le temps de disparition des particules solides; une formulation est jugée de bonne qualité dans la mesure où le temps de dissolution n'excède pas quelques minutes, préférentiellement deux minutes.

La dureté des granulés est appréciée de façon empirique en écrasant- quelques granulés placés dans le creux d'une main au moyen de l'index de la main opposée; un granulé de bonne qualité ne doit pas donner lieu à la formation de poussière.

On a constaté que les formulations selon l'invention sont satisfaisantes de ce point de vue.

Les blocs notamment de forme parallélépipédique obtenus par compactage, notamment sous une pression de 0,1 à 10 kPa, à partir de la composition herbicide granulaire conforme à l'invention, sont particulièrement avantageux pour le stockage, le transport et la détermination de quantités données de composition herbicide granulaire conforme à l'invention en prévoyant, notamment à la surface de ces blocs, des marquages de prédécoupe.

Les propriétés de dissolution de ces blocs sont sensiblement équivalentes à celles des granulés cylindriques individuels, notamment en raison de leur structure poreuse.

L'invention pourra être encore mieux comprise à l'aide des exemples non limitatifs qui suivent et dans lesquels sont décrits des modes de réalisation avantageux.

### EXEMPLE 1

100 g d'aminotriazole broyé, de qualité technique, sont placés dans un cristallisoir et humidifiés progressivement par une fine pulvérisation de 12 à 14 ml d'eau. On homogénéise régulièrement le mélange tout au long de l'opération au moyen d'une spatule.

La poudre ainsi obtenue est susceptible de se compacter sous la pression de la spatule en donnant des écailles de quelques millimètres d'épaisseur.

Cette poudre humide est forcée à travers une grille percée de trous circulaires de 1,2 mm de diamètre en utilisant une extrudeuse rotative de façon à former des granulés cylindriques en forme de filaments de quelques centimètres de longueur, notamment de 2 à 6 cm, et de 1,2 mm de diamètre.

Les granulés cylindriques obtenus sont séchés dans une étuve à 80°C pendant 4 heures.

Ils sont fragmentés en tronçons de 2 à 6 mm de longueur par écrasement au moyen d'un pinceau sur un tamis métallique équipé d'une maille de 0,5 mm d'ouverture de façon à séparer simultanément les poussières fines qui peuvent se former au cours de cette dernière opération.

Les granulés cylindriques ainsi obtenus ont une dureté satisfaisante et se dissolvent en environ deux minutes.

### EXEMPLE 2

On mélange intimement dans un bécher au moyen d'une spatule métallique:
94 g d'aminotriazole broyé de qualité technique et
6 g de laurylsulfate de soude.

La poudre fluante obtenue est humidifiée par une fine pulvérisation de 10 à 12 ml d'eau en homogénéisant constamment le mélange.

La poudre ainsi obtenue a une consistance suffisante pour être traitée par extrusion à travers une grille munie de trous de 1,2 mm de diamètre; on obtient des granulés cylindriques de quelques cm de longueur, notamment de 2 à 6 cm.

Ces granulés ont séché sur un lit fluidisé de laboratoire à une température de 70°C pendant une durée de 20 à 30 minutes.

L'effet mécanique de l'air de séchage provoque la rupture des granulés les plus longs, la longueur moyenne des granulés étant alors de 2 à 4 mm; un dépoussiérage sur un tamis de 0,5 mm d'ouverture de maille permet de séparer les poussières fines et d'aboutir au produit désiré.

Les granulés cylindriques ainsi obtenus ont une dureté satisfaisante et se dissolvent en environ deux minutes.

### EXEMPLE 3

On introduit dans un broyeur/mélangeur à couteaux:
50 g d'aminotriazole technique
47 g de thiocyanate de sodium technique et
3 g de tensio-actif à base de dioctylsulfosuccinate de sodium (notamment celui commercialisé par la Demanderesse sous la marque GALORYL MT 323).

Après homogénéisation de la poudre obtenue, le mélange est placé dans un cristallisoir de 150 mm de diamètre et on l'humidifie par de fines pulvérisations d'eau alternées avec des réhomogénéisations au moyen d'une spatule; la quantité totale d'eau ajoutée est de 6%.

Lorsque le mélange devient collant, on peut le soumettre à une extrusion à travers une grille percée de trous cylindriques de 1,2 mm de diamètre.

Les granulés cylindriques recueillis sont séchés en enceinte close à humidité contrôlée et inférieure à 20% d'humidité relative à 22°C.

On sélectionne la fraction passant à travers un tamis de 2,5 mm d'ouverture de maille et retenue sur un tamis de 0,8 mm d'ouverture de maille.

Les granulés cylindriques ainsi obtenus ont une dureté satisfaisante et se dissolvent en environ deux minutes.

### EXEMPLE 4

On introduit dans un broyeur de laboratoire
100 g d'aminotriazole technique
94 g de thiocyanate d'ammonium technique
et on obtient 194 g d'une poudre homogène d'une granulométrie inférieure à 0,25 mm.

La moitié de cette poudre, à savoir 97 g, est additionnée de 3 g de tensio-actif à base de dioctylsulfosuccinate de sodium (celui commercialisé par la Demanderesse sous la marque GALORYL MT 323), le mélange étant malaxé dans un bécher au moyen d'une spatule.

Du fait du caractère hygroscopique du thiocyanate d'ammonium, le mélange est capable d'absorber l'humidité ambiante si celle-ci est suffisamment élevée; dans le cas contraire, on peut accélérer l'humidification par une fine pulvérisation d'eau dans l'atmosphère située au-dessus du produit.

Dès que le produit atteint la consistance suffisante, on effectue la granulation par extrusion à travers une grille percée d'orifices de 1,2 mm de diamètre.

Les granulés cylindriques collants obtenus sont répartis dans des récipients de section carrée de 35 mm de côté, de façon à former des blocs de cette dimension avec une épaisseur de 20 mm.

Cette opération est effectuée en comprimant au minimum le matériau, la pression appliquée étant de 5 kPa.

Les blocs obtenus sont immédiatement placés en atmosphère sèche dans un dessiccateur à vide dans lequel l'agent desséchant est le chlorure de calcium déshydraté.

Au bout de douze heures, ils peuvent être manipulés en atmosphère sèche, c'est-à-dire présentant une humidité relative inférieure à 35% pour une température de 22°C, pour être conditionnés ensuite dans tout emballage les mettant à l'abri de l'humidité.

Leur vitesse de dissolution est appréciée en plaçant directement un bloc dont la masse est voisine de 18 g, dans une éprouvette de 1 litre selon le protocole décrit plus haut. La vitesse en question est telle que le bloc est pratiquement désagrégé et dissous au bout d'un temps qui n'est pas sensiblement supérieur à celui nécessaire en partant des granulés individuels, à savoir environ deux minutes.

### EXEMPLE 5

On mélange intimement dans un bécher 38,65 g de glyphosate sous sa forme acide à 97% de pureté, 18,625 g de bicarbonate de soude et 4,685 g d'eau. On laisse réagir le mélange en réhomogénéisant périodiquement jusqu'à obtention d'un poids constant, ce qui peut demander plusieurs jours en fonction de la granulométrie plus ou moins fine des constituants du mélange.

La poudre précédente est alors mélangée intimement avec 15 g de laurylsulfate de soude, 154,8 g d'aminotriazole à 96% de pureté, 145,25 g de thiocyanate de sodium à 92,5% de pureté, 70,97 g de sulfate d'ammonium de qualité agricole et 70,45 g de carbonate de soude.

Le mélange obtenu est enfin humidifié par addition en mince filet et sous homogénéisation continue au moyen d'un malaxeur de type ménager, de 35 g d'eau.

La poudre humide qui a alors la consistance voulue est soumise à l'extrusion à travers une grille percée de trous de 0,8 mm de diamètre.

Les granulés cylindriques obtenus sont séchés en étuve en lit fixe mince de quelques millimètres d'épaisseur pendant une durée de 2 heures à une température de 60°C. Ils sont calibrés sur tamis entre 2 et 0,6 mm.

Les granulés cylindriques ainsi obtenus ont une dureté satisfaisante et se dissolvent en environ deux minutes.

## Revendications

1. Composition herbicide granulaire, soluble dans l'eau, à base d'aminotriazole seul ou en combinaison avec au moins un thiocyanate alcalin, alcalino-terreux ou d'ammonium, caractérisée par le fait qu'elle se présente sous la forme de granulés compactables, non arrondis et de forme cylindrique, de composition et de diamètre substantiellement identiques d'un granulé de forme cylindrique à l'autre pour une composition herbicide granulaire donnée, le diamètre desdits granulés étant de l'ordre de 0,4 à 2 mm, de préférence de 0,8 à 1,4 mm, et le rapport diamètre/longueur entre 1/1 et 1/5, ladite composition herbicide granulaire étant susceptible d'être obtenue par mise en oeuvre d'un procédé suivant lequel de l'aminotriazole seul ou en mélange intime homogène avec au moins un thiocyanate alcalin, alcalino-terreux ou d'ammonium, est successivement amené par broyage à une granulométrie convenable, mélangé à une quantité d'eau suffisante pour assurer sa cohésion sous une pression modérée et amené à traverser les orifices de la grille d'un appareil d'extrusion, les granulés de forme cylindrique ainsi obtenus étant séchés.

2. Composition herbicide granulaire selon la revendication 1, susceptible d'être obtenue par mise en oeuvre d'un procédé suivant lequel de l'aminotriazole seul ou en mélange intime homogène avec au moins un thiocyanate alcalin, alcalino-terreux ou d'ammonium, est successivement amené par broyage à une granulométrie convenable, mélangé à une quantité d'eau suffisante pour assurer sa cohésion sous une pression modérée, mis en présence d'un agent tensio-actif et amené à traverser les orifices de la grille d'un appareil d'extrusion, les granulés de forme cylindrique ainsi obtenus étant séchés.

3. Composition selon la revendication 2, caractérisée par le fait que l'agent tensio-actif est du type non ionique ou anionique, qu'il est présent en une proportion de 0 à 11%, de préférence de 0 à 3% en poids par rapport à la composition et qu'il est choisi parmi les alcools gras polyoxyalkylénés, les alkylphénols polyalkylénés, de préférence les nonylphénols polyoxyéthylénés, pour ce qui est des tensio-actifs non ioniques et parmi les sels de sodium des dérivés sulfatés d'alcools gras polyalkylénés ou non, d'alkylphénols polyalkylénés ou non, ainsi que parmi les alkylsulfosuccinates de sodium, de préférence le dioctylsulfosuccinate de sodium, pour ce qui est des tensio-actifs anioniques.

4. Composition herbicide granulaire, soluble dans l'eau, à base d'aminotriazole seul ou en combinaison avec au moins un thiocyanate alcalin, alcalino-terreux ou d'ammonium, selon l'une des revendications 1 à 3, caractérisée par le fait qu'elle se présente sous la forme de blocs, avantageusement parallélépipédiques obtenus par compactage avant séchage, sous une pression suffisante, notamment de 0,1 à 10 kPa d'une quantité suffisante de ses granulés constitutifs.

## Claims

1. Granular herbicidal water-soluble composition based either on aminotriazole alone
or on aminotriazole combined with at least one alkaline, alkaline-earth metal or ammonium thiocyanate, characterized in that it is provided in the form of compactable granules non rounded and of cylindrical shape, with a composition and a diameter which are substantially identical from one granule of cylindrical shape to another for a given granular herbicidal composition, the diameter of the said granules being of the order from 0.4 to 2 mm, preferably from 0.8 to 1.4 mm the ratio diameter/length being comprised between 1/1 and 1/5, the said granular herbicidal composition being obtainable by use of a process according to which amonotriazole, alone or as an intimate homogeneous mixture with at least one alkaline, alkaline-earth metal or ammonium thiocyanate, is, successively, brought by milling to a suitable particle size, mixed with an amount of water sufficient to ensure its cohesion under a moderate pressure, and directed through the orifices of the grid of an extrusion device, the said granules of cylindrical shape thus obtained being dried.

2. Granular herbicidal water-soluble composition according to claim 1 obtainable by use of a process according to which aminotriazole, alone or as an intimate homogeneous mixture with at least one alkaline, alkaline-earth metal or ammonium thiocyanate is successively brought by milling to a suitable particle size, mixed with an amount of water sufficient to ensure its cohesion under a moderate pressure, brought together with a surface-active agent and directed through the orifices of the grid of an extrusion device, the said granules of cylindrical shape thus obtained being dried.

3. Composition according to claim 2, characterized in that the surface-active agent is of the nonionic or anionic type, is present in a proportion from 0 to 11%, preferably from 0 to 3% by weight with respect to the composition and is selected among polyoxyalkylenated fatty alcohols or polyalkylenated alkylphenols, preferably polyoxyethylenated nonylphenols as far as the nonionic surface active agents are concerned, and among sodium salts of sulphated derivatives of polyalkylenated or non polyalkylenated fatty alcohols or of polyalkylenated or non-poly-alkylenated alkylphenols and among sodium alkylsulphosuccinates, preferably sodium dioctyl sulphosuccinate, as far as the anionic surface active agents are concerned.

4. Granular herbicidal water-soluble composition based on aminotriazole, alone or in combination with at least one alkaline, alkaline-earth metal or ammonium thiocyanate according to one of claims 1 to 3, characterized in that it is present in the form of blocks, advantageously parallelepipedic, obtained by compacting before drying under a sufficient pressure notably from 0.1 to 10kPa of a sufficient amount of its constituent granules.

## Patentansprüche

1. Körnige herbizide wasserlösliche Zusammensetzung, auf der Basis von Aminotriazol allein oder in Kombination mit zumindest einem alkalischen, erdalkalischen oder Ammoniumthiozyanat dadurch gekennzeichnet, dass sie in Form von kompaktierbaren Körnchen vorliegt, welche nicht rund sind und eine zylinderische Form haben, wobei deren Zusammensetzung und Durchmesser im wesentlichen von einem zylindrischen Körnchen zum anderen identisch sind, bei einer gegebenen körnigen herbiziden Zusammensetzung, wobei der Durchmesser der Körnchen in der Grössenordnung von 0,4 bis 2 mm vorzugsweise von 0,8 bis 1,4 mm liegt, und das Verhältnis Durchmesser/Länge zwischen 1/1 und 1/5 liegt, wobei die infragestehende körnige herbizide Zusammensetzung mit Hilfe eines Verfahrens erhältlich ist, zufolge dem Aminotriazol allein oder in homogener inniger Mischung mit zumindest einem alkalischen, erdalkalischen oder Ammoniumthiozyanat nacheinander durch Zerkleinerung oder Schroten bis auf eine geeignete Granulometrie gebracht wird, mit einer Wassermenge vermischt wird die genügend ist um seine Kohesion unter einem mässigen Druck zu gewährleisten und durch die Öffnungen des Gitters eines Extrudierapparats gebracht wird, wobei die derartig erhaltenen Körnchen zylindrischer Form getrocknet werden.

2. Körnige herbizide Zusammensetzung gemäss Anspruch 1, erhältich mit Hilfe eines Verfahrens demzufolge Aminotriazol allein oder in homogener inniger Mischung mit zumindest einem alkalischen, erdalkalischen oder Ammoniumthiozyanat nacheinander durch Zerkleinern oder Schroten auf eine geeignete Granulometrie gebracht wird, mit einer Wassermenge gemischt wird, die genügend ist, um dessen Kohesion unter einem mässigen Druck zu gewährleisten, in Gegenwart eines grenzsflächenaktiven Mittels gebracht wird und durch die Öffnungen des Gitters eines Extrudierapparats geführt wird, worauf die so erhaltenen Körnchen zylindrischer Form getrocknet werden.

3. Zusammensetzung nach Anspruch 2, dadurch gekennzeichnet, dass das grenzflächenaktive Mittel nicht ionischen oder anionischen Typs ist, das in einem Verhältnis von 0 bis 11 % ist vorzugsweise von 0 bis 3 % mit Bezugnahme auf die Zusammensetzung vorliegt und dass es ausgewählt ist unter polyoxyalkylenierten Fettalkoholen, polyoalkylenierten Alkyphenolen vorzugsweise polyoxyäthylinierten Nonylphenolen, insofern es sich um die nichtionischen grenzflächenaktiven Mittel handelt und unter den Natriumsalzen der sulfatierten Derivate von polyalkylenierten oder nicht polyalkylenierten Fettalkoholen, polyalkylenierten oder nichtpolyalkylenierten Alkylphenolen, sowie unter den Natriumalkylsulfosuccinaten, vorzugsweise dem Natriumdioctylsulfosuccinat, insofern es sich um die anionischen grenzflächenaktiven Mitteln handelt.

4. Körnige herbizide wasserlösliche Zusammensetzung, auf der Basis von Aminotriazol allein oder in Kombination mit zumindest einem alkalischen, erdalkalischen oder Ammoniumthiozyanat nach einem der Ansprüche 1 bis 3, dadurch gekennzeichnet, dass sie unter der Form von Blöcken vorliegt, vorzugsweise parallelepipedischer Form, die durch Kompaktierung vor Trocknung unter einem genügenden Druck, insbesonderes von 0,1 bis 10 kPa, einer genügenden Menge, der die Zusammensetzung bildenden Körnchen erhalten wird.
